## Europäisches Patentamt
## European Patent Office
## Office européen des brevets

(11) Publication number: **0 142 377**
**B1**

# EUROPEAN PATENT SPECIFICATION

(45) Date of publication of patent specification: **11.01.89**

(51) Int. Cl.⁴: **B 05 B 3/10**

(21) Application number: **84307927.8**

(22) Date of filing: **15.11.84**

(54) **Spray device and method of spraying a slurry.**

(30) Priority: **17.11.83 GB 8330662**
**17.11.83 GB 8330663**

(43) Date of publication of application:
**22.05.85 Bulletin 85/21**

(45) Publication of the grant of the patent:
**11.01.89 Bulletin 89/02**

(84) Designated Contracting States:
**AT BE CH DE FR IT LI LU NL SE**

(56) References cited:
**EP-A-0 112 101**
**GB-A-1 161 560**
**GB-A-2 084 896**
**US-A-2 728 607**
**US-A-3 469 718**

(73) Proprietor: **DRESSER INDUSTRIES, INC.**
**The Dresser Building Elm At Akard P.O. Box 718**
**Dallas Texas 75021 (US)**

(72) Inventor: **Erickson, John Waldemar**
**17072 Westport Drive**
**Huntington California (US)**
Inventor: **Guest, Graham John**
**24 Belmont Road Ironbridge**
**Telford Shropshire (GB)**

(74) Representative: **Holdcroft, James Gerald, Dr.**
**et al**
**Graham Watt & Co. Riverhead**
**Sevenoaks Kent TN13 2BN (GB)**

Courier Press, Leamington Spa, England.

## Description

This invention is concerned with improvements in or relating to liquid spraying particularly but not exclusively the spraying of a liquid/solid slurry.

In for example U.K. Patent Application 2,084,896A (Patent No. 2,084,896B) of Lodge-Cottrell Limited (assigned to Dresser U. U. Limited—equivalent EP.B.0049585 there is described a spray device for liquids comprising a high speed rotating cup the interior of which provides an extended surface from which the liquid is directed; when the liquid has left the surface it is impacted with a gas stream thereby to produce a spray of liquid droplets.

One of the technical applications described in Patent Application 2,084,896 for this spray device is the treatment of a polluted gas e.g. containing sulphur dioxide, by the spraying into the gas of a liquid/solid slurry e.g. an aqueous lime slurry.

One problem which sometimes arises with the spraying of a slurry using a rotating cup spray device is the uncontrolled build-up of solids on the spray device, which for example may upset its dynamic balance and can result in serious mechanical failure; build-up of solids can also result in blockage of liquid supply ducts.

It is believed that the build-up of solids can result for example from the back-circulation of the sulphur dioxide containing gas, which then reacts with the lime slurry to form a solid reaction product.

Also described in Patent Application No. 2,084,896 is the use of a sodium carbonate solution in replacement of the aqueous lime slurry; other technical applications described therein are conditioning of a gas with water prior to passage through an electro-precipitator, and the evaporative cooling with water of a hot polluted gas; in all these cases build-up of solids can arise e.g. if the liquid being sprayed contains solid particulate impurities; or the risk of build-up of solids may arise from the nature of the polluted gas e.g. in the case of the evaporative cooling of polluted gas from a cement plant.

It is an object of the present invention to provide an improved spray device in which uncontrolled build-up of solids is inhibited.

In the spray device of Patent Application No. 2,084,896 the liquid is supplied the interior of the cup by distribution means which rotates with the cup where the liquid is directed by the distribution means onto the extended surface; and we have now found that advantageously the distribution means is maintained stationary.

The invention provides a spray device comprising: (a) an axially symmetrical spray cup having an outer rim and an interior surface; (b) a distributor assembly arranged symmetrically with respect to the cup, and which directs liquid onto the interior surface to provide a film of liquid on the interior surface preparatory to directing the liquid from the surface past the outer rim, which distributor assembly is stationary where it directs the liquid onto the interior surface; and (c) means for supplying a gas stream to impact the liquid immediately beyond the rim to produce a spray of liquid droplets; the distributor assembly comprising; (d) a downstream duct portion; and (e) a stationary swirl member which provides a swirl component of motion in the liquid being directed onto the interior surface and is axially symmetrically located within the downstream duct portion, and wherein an annular passage is defined between the swirl member and the duct portion, the swirl member comprising: (f) an axially symmetrical upstream conical portion with the apex of the cone leading with respect to the liquid flow.

The included conical angle of the upstream conical portion is for example from 20° to 85° preferably from 20° to 40°, more preferably from 20° to 30°.

In embodiments of the invention described hereinafter the cup is rotated, but we believe under certain conditions it may also be possible to operate satisfactorily with the cup stationary.

The interior surface of the cup for example converges generally frusto-conically from the outer rim of the cup, and the included frusto-conical angle is e.g. from 20° to 160°, preferably from 60° to 120°, and more preferably from 70° to 100°.

The cup in external profile comprises for example a cylindrical upstream portion and a frusto-conical downstream portion; the ratio between the axial height of the frusto-conical portion and the height of the cylindrical portion is for example from 3:1 to 1:3, preferably from 2:1 to 1:3.

The ratio of the diameter (D) of the cup at its outer rim to the axial distance (d) from the outer rim to a point where the liquid enters the interior of the cup (D:d) is for example from 3:1 to 6:1, preferably from 3:1 to 4:1.

When the spray device has a capacity up to about $113.7 \times 10^{-5} m^3/s$ (15 Imperial gallons per minute) (e.g. a capacity in the range from 15.15 to $113.7 \times 10^{-5} m^3/s$ (2 to 15 Imperial gallons per minute)):

(i) the diameter of the cup at its outer rim for example does not exceed about 120 mm, preferably does not exceed about 110 mm and more preferably does not exceed 80 mm.

(ii) the overall height of the cup does not exceed about 160 mm.

When the spray device has a higher capacity e.g. up to 227.3 or $378.8 \times 10^{-5} m^3/s$ (30 or 50 Imperial gallons per minute) then the numerical upper limits are likely to be increased.

The swirl member comprises for example an axially symmetrical downstream portion extending into the cup coaxially therewith and which provides a downstream facing baffle to gas flow, an unobstructed annular gap being defined between the baffle and the interior of the cup the baffle portion being for example frusto-conical, diverging in the downstream direction.

The major diameter of the baffle is for example at least 70% and more preferably at least 75% of the diameter of the interior surface of the cup at the plane of said major diameter.

The baffle is for example frusto-conical with its included angle not exceeding about 140°, preferably not exceeding about 120°, and more preferably from 70° to 110°.

The baffle is for example set back from the outer rim of the cup so that the ratio between the diameter (D) and the axial distance (d') from the outer rim to the baffle is (D:d') from 4:1 to 8:1, preferably from 5:1 to 8:1.

The spray devices embodying the invention find particular, but not exclusive technical application in an apparatus and method for desulphurising a sulphur-dioxide containing gas by spray drying using an aqueous lime slurry, as described in Patent Application No. 2,084,896. The spray devices embodying the invention may also be employed in the other technical applications described in Patent Application No. 2,084,896; a further possible technical application is in the treatment of a polluted gas from an incinerator plant where for example a sodium carbonate solution is used to remove inter alia hydrogen chloride from the gas.

The invention also provides a method of spraying a slurry using a spray device comprising: (a) an axially symmetrical spray cup having an outer rim and an interior surface: (b) a stationary liquid, distributor assembly arranged symmetrically with respect to the cup; the distributor assembly comprising: (c) a downstream duct portion; and (d) a stationary swirl member which is axially symmetrically located within the downstream duct portion, and wherein an annular passage is defined between the swirl member and the duct portion, the swirl member comprising: (e) an axially symmetrical upstream conical portion with the apex of the leading with respect to the downstream direction; wherein the method comprises the steps of: (f) directing slurry along the annular passage past the stationary swirl member so that a swirl component of motion is provided in the slurry; and (g) directing the slurry with its swirl component of motion onto the interior surface to provide a film of slurry on the interior surface preparatory to directing the slurry from the surface past the outer rim; and (h) supplying a gas stream to impact the slurry immediately beyond the rim to produce a spray of liquid droplets.

The invention also provides a process of treating a polluted gas with an aqueous slurry wherein the slurry is sprayed into the gas by a method according to the invention.

The gas may, for example, contain a solid pollutant e.g. fly ash or cement dust and/or a gaseous pollutant e.g. sulphur dioxide, nitrogen oxide, hydrogen chloride and mixtures thereof.

The invention also provides apparatus adapted for use in absorbing a gaseous pollutant from a pollutant-containing gas under spray drying conditions comprising: a spray dryer vessel; a spray device according to the invention adapted to spray an aqueous absorbent liquid into the vessel for reaction with the pollutant in the gas under the spray drying conditions to produce a solid reaction product; and a separator arranged to separate solid reaction product from the gas.

Our European Patent Application EP—AP0 112 101 (now European Patent EP—B—0 112 101—equivalent GB 2,131,328B) was published on 27th June 1984 subsequent to the priority date of the present application of 17th November 1983, but claims priority from 10th December 1982 and 17th November 1983. This document falls under Article 54(3), EPC.

EP—A—0 112 101 discloses a spray device comprising: (a) an axially symmetrical spray cup having an outer rim and an interior surface; (b) a distributor assembly arranged symmetrically with respect to the cup, and which directs liquid onto the interior surface to provide a film of liquid on the interior surface preparatory to directing the liquid from the surface past the outer rim, which distributor assembly is rotating where it directs the liquid onto the interior surface; and (c) means for supplying a gas stream to impact the liquid immediately beyond the rim to produce a spray of liquid droplets; the distributor assembly comprising a downstream duct portion.

EP—A—0 112 101 also discloses the use of the spray device in a process and apparatus for treating a polluted gas with an aqueous slurry; a gaseous pollutant is absorbed from the pollutant-containing gas under spray drying conditions to produce a solid reaction product which is then separated from the gas.

There now follows a description, to be read with reference to the accompanying drawings of embodiments of the invention. This description, which is illustrative of method and apparatus aspects of the invention, is given by way of example only, and not by way of limitation of the invention.

In the accompanying drawings:

Figure 1 shows a flow diagram of apparatus adapted for use in desulphurising flue gas;

Figure 2 shows a part-sectional view of a rotary cup atomiser;

Figure 3 shows an enlarged view of parts also shown in Figure 2;

Figure 3A shows a perspective view of a part also shown in Figure 2;

Figure 4 shows a part-sectional view of a modified rotary cup and distributor assembly; and

Figure 5 illustrates conical angles.

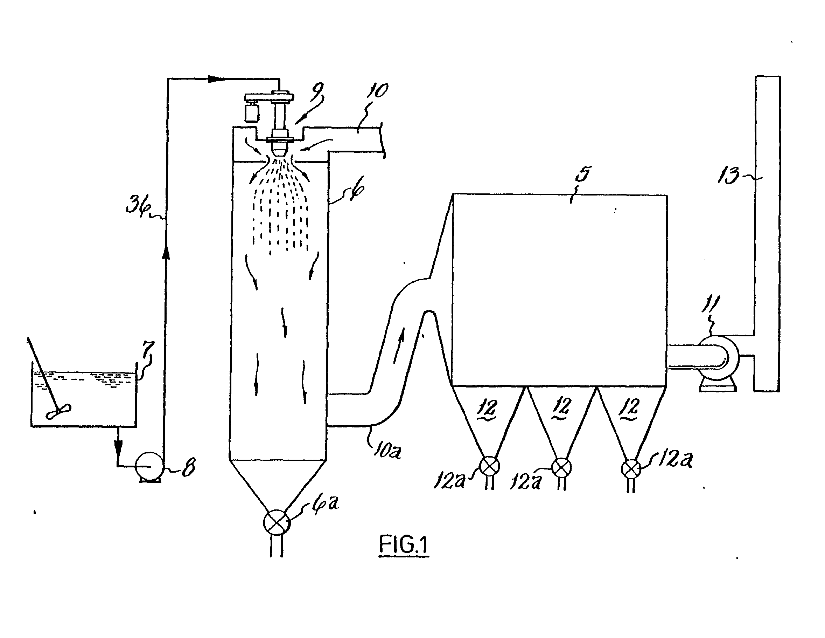

Apparatus adapted for use in desulphurising flue gas from a coal-fired installation is illustrated schematically in Figure 1. A unit shown at 5 for treating the flue gas after a tall thin spray drier tower 6, comprises a bag filter or an electroprecipitator. Slurries of slaked lime or limestone are prepared in a vessel 7 and pumped by a pump 8 via a line 36 to a rotating cup atomiser 9 at the top of tower 6. Hot gas, for example boiler flue gas at a temperature between 120°C and 200°C containing sulphur dioxide as a pollutant (e.g. 300—3,000 p.p.m. $SO_2$ by volume) is directed to the top of the tower 6 *via* line 10. Spray drying occurs in the tower 6 upon contact of the hot gas and the atomised slurry, and dry powder effluent is collected at the bottom of tower 6 and removed *via* a valve 6*a*. The flue gas then passes *via* line 10*a* through bag filter or electro-precipitator 5 and further powder effluent and fly ash (including some spent absorbent) is separated from the gas, collected in hoppers 12 and removed *via* valves 12*a*. The substantially desulphurised flue gas is then exhausted by a fan 11 to the atmosphere *via* a stack 13.

The tower 6 and its operation are generally similar to the tower described in Patent Application No. 2,084,896 with reference to Figures 6, 7 and 8 thereof. Typically a single tower 6 handles up to 14000 cubic meters (500,000 cubic feet) (ambient conditions) per minute of flue gas, and a 500 Megawatt coal burning power station would require 4 or 5 such towers to handle its entire flue gas effluent.

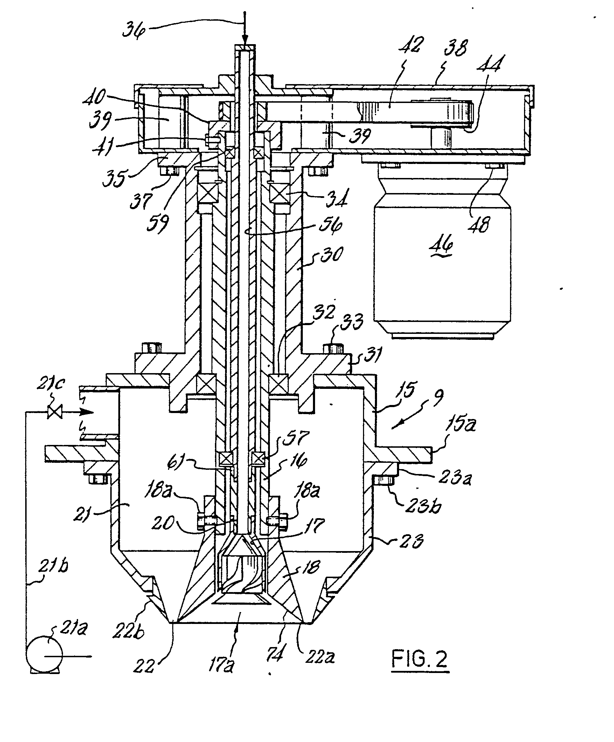

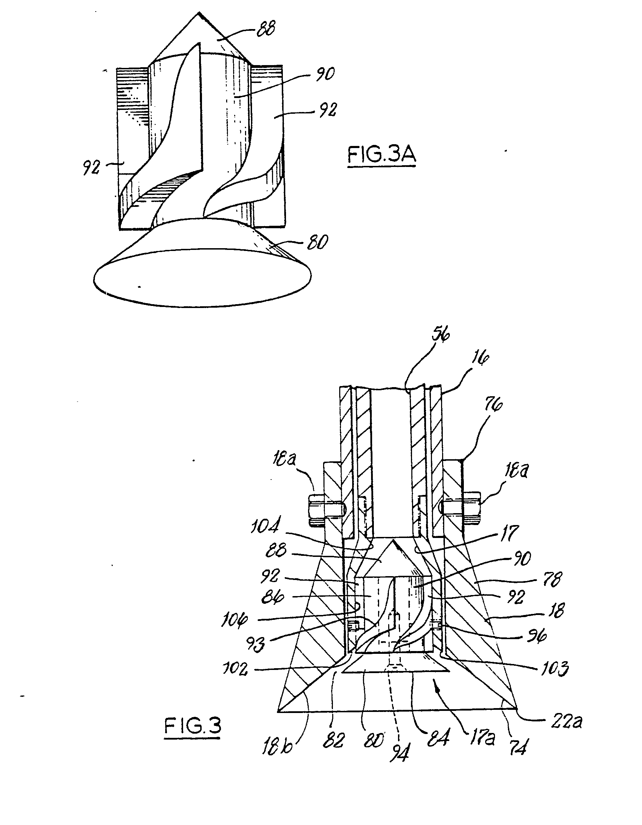

The rotating cup atomiser 9 is shown in more detail in Figure 2. In the atomiser 9 a liquid supply path comprises a hollow vertical stationary duct portion 56, and a vertical downstream duct portion 17 (Figure 3) of a generally axially symmetrical stationary distributor assembly 17*a* which is screwed onto a lower stub end portion 20 of the duct portion 56, and leads symmetrically to the interior 18*b* of a massive axially symmetrical rotating cup 18 of integral form. The slurry line 36 leads into the duct portion 56.

it will be noted that the liquid supply path from the top of duct 56 downwardly is generally symmetrical about the axis of the duct portion 56, and about the axis of rotation of the cup 18.

The cup 18 of integral form is secured to a lower end portion of a rotatable hollow shaft 16, by radially spaced set screws 18*a*. The cup 18 rotates with the shaft 16 about its axis in the operation of the atomiser, but it will be realized the duct portion 56, and the distributor assembly 17*a* remain stationary; the shaft 16 is spaced from the duct portion 56 by ball bearings 57, 59. The duct portion 56 is telescoped at 61 to accommodate the ball bearing 57.

Air is supplied to the atomiser 9 through an annular chamber 21 external to the cup 18 by, for example, a blower 21*a* connected to the chamber 21 *via* a line 21*b* which includes a control valve 21*c*. The air exits the chamber 21 at high velocity 85.34 mls (280 feet/second) *via* an annular nozzle aperture 22 defined around a lower, outer, rim 22*a* of the rotary cup 18 and between the cup 18 and a stationary cup shroud 23 which defines an outer wall of the chamber 21. The shroud 23 comprises a lower ring portion 22*b* the interior of which converges downwardly to define the outer boundary of the nozzle aperture 22.

The shroud 23 is bolted at 23*b* to a housing element 15 *via* respective flanges 23*a*, and 15*a*; the flange 15*a* is used in mounting the atomiser 9 in the tower 6. The shaft 16 extends upwardly through a housing element 30 where it is mounted in axially spaced ball bearings 32, 34.

The housing element 30 is bolted at 33 to the housing element 15 *via* a flange 31, and extends downwardly a short distance from the flange 31 into the housing element 15.

An upper end portion of the shaft 16 extends into a belt housing 38 which is bolted at 37 to the housing element 30 *via* a flange 35; the housing 38 is reinforced by pillars 39. A belt pulley 40 is secured by two set screws 41 (only one of which is shown) to the upper end portion of the shaft 16 within the housing 38 and a drive belt 42 is tensioned within the housing 38 around the pulley 40 and a drive pulley 44 of an electric motor 46. The electric motor 46 is bolted to the housing 38 at 48.

In operation the cup 18 is rotated by the electric motor 46 at a speed of e.g. from 3,000 to 5,000 or 6,000 r.p.m., and the aqueous slurry of e.g. calcium hydroxide is continuously supplied to the interior 18*b* of the rotating cup 18 *via* the supply path including the distributor assembly 17*a* and is continuously distributed around an extended interior surface 74 of the cup 18 as a uniform thin film. As centrifugal force directs the suspension past the rim 22*a* of the cup it is atomised immediately beyond the rim 22*a* by impaction with the high velocity stream of air exiting downwardly through aperture 22. This causes instability in the liquid film and results in the production of a spray of fine droplets, which is sprayed into the sulphur dioxide-containing flue gas whereby to absorb sulphur dioxide from the gas with chemical reaction. The ambient conditions of the flue gas are such that all the water is evaporated and the reaction product is dried as it is formed.

Further details of the cup 18, and the distributor assembly 17*a* will now be described with special reference to Figure 3.

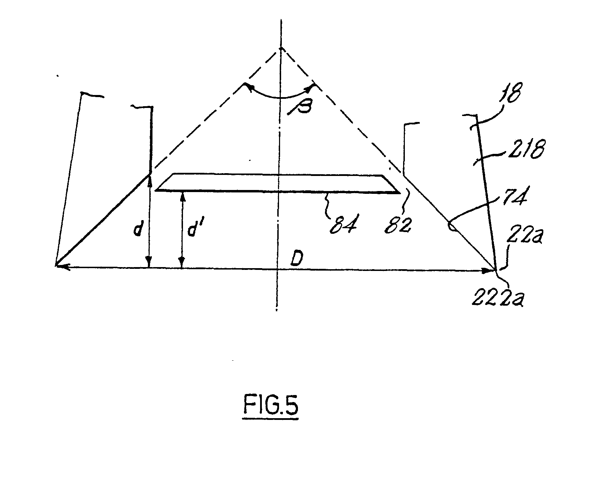

The massive integral cup 18 comprises an upper externally circular cylindrical portion 76 which is secured to the shaft 16 by the set screws 18*a* and a lower externally frusto-conical portion 78 which converges upwardly from the rim 22*a*. The rim 22*a* of the cup 18 is sharply pointed and the interior surface 74 is again upwardly converging frusto-conical. The included frusto-conical angle ß (Figure 5) of the surface 74 is about 103°; the overall height of the cup 18 from the rim 22*a* to the top of the cylindrical portion 76 is about 83 mm; the diameter (D) of the cup 18 at the rim 22*a* is about 75 mm. The ratio of the axial height of the frusto-conical portion 78 to the cylindrical portion 76 is about 2.25:1.

A lower portion 80 of the stationary distributor assembly 17*a* forms a frusto-conical baffle portion within the cup 18 coaxially therewith, leaving an annular gap 82 between the baffle portion 80 and the interior of the cup 18. A lower horizontal surface 84 of the baffle portion 80 is set back upwardly from the rim 22*a* of the cup 18. The axial distance (d) from the rim 22*a* to the upper extremity of the surface 74 is about 20 mm and the ratio (D:d) therefore about 3.75:1. The diameter of the surface 84 (i.e. the major diameter of the frusto-conical baffle portion 80) is about 78% of the horizontal diameter of the surface 74 at the plane of the surface 84, and the annular gap 82 is at least sufficiently wide so as to avoid the possibility of obstruction by solid particles in the slurry. The included conical angle of the baffle is about 103°. The axial distance (d') from the rim 22a to the surface 84 is about 12 mm and the ratio (D:d') therefore about 6.25:1.

The distributor assembly 17a also comprises a stationary swirl member 86 located axially symmetrically within the duct portion 17, an annular passage being defined between the swirl member 86 and the duct portion 17. The swirl member 86 comprises an upright sharply pointed conical upper end portion 88 and a cylindrical lower end portion 90 from which extend outwardly four symmetrically arranged swirl blades 92 (only three of which are shown). The included conical angle of the upper end portion 88 is about 80°. The baffle portion 80 is secured to the cylindrical portion 90 by a screw 94, and the swirl member 86 is secured within the duct 17 by locking pins 96 which engage the swirl blades 92. Each swirl blade 92 (as viewed in Figure 3) has a distorted L-configuration with the lower limb 93 of the L inclined generally at the same angle as the surface 74 of the cup 18.

The duct portion 17 comprises an upright frusto-conical upper portion 104 vertically coextensive with the conical portion 88 of the swirl member 86, and a lower cylindrical portion 106 which terminates in a frusto-conical end surface 102 collinear with the surface 74 of the cup 18 and terminating in a rim 103. The lower portion 90 of the swirl member 86 and the swirl blades 92 terminate in the plane of the rim 103.

In operation the slurry supplied *via* the interior of the stationary duct 56 and being directed onto the extended surface 74 by the distributor assembly 17a is given a swirling component of motion by the blades 92; and the slurry forms a thin continuous film on the surface 74 as previously described herein; the cup 18 rotates in the same sense as the swirling motion. Acceleration of the slurry does not take place until it reaches the surface 74, where it is caused by the rotation of the cup 18.

It will be noted that the annular gap 82 is unobstructed downstream of the blades 92 and this further minimises the risk of blockage of the flow of slurry due to solids build-up. It will be noted also that there are no slurry passages of significantly restricted cross section upstream of the gap 82.

It has been found that the atomiser 9 operates satisfactorily with flow rates of slurry e.g. from 7.58—75.8×10⁻⁵m³/s (1 to 10 Imperial gallons per minute) and with slurry concentrations up to e.g. 40% lime solids by weight.

It is believed that the atomiser 9 provides for minimum liquid or slurry contact time and thin film formation on the extended surface of the cup, to reduce the tendency for build-up of solids either through chemical or mechanical action.

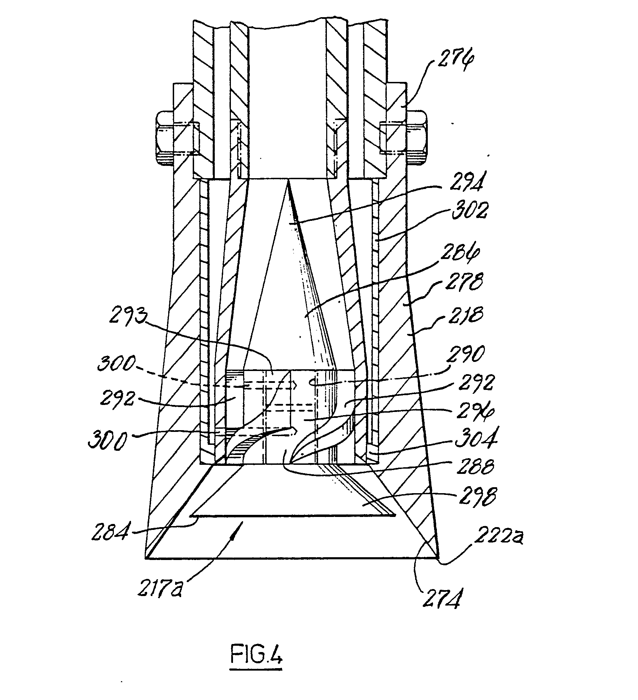

The modified cup and distributor assembly shown in Figure 4 resembles that shown in Figure 3 in many respects of construction and arrangement, and is described insofar as it differs therefrom.

The distributor assembly 217a of Figure 4 is generally longer and more streamlined than the distributor assembly 17a. The assembly 217a comprises a swirl assembly 286 which comprises a cylindrical central portion 288 from which extend four swirl blades 292. The central portion 288 comprises an axial bore 290 into which are screwed a stub 293 of a conical upper end portion 294, and a stub 296 of a lower frusto-conical baffle portion 298; the stubs 292, 296 are secured in the bore 290 by locking pins 300.

A cylindrical plastics bush 302 is secured within the cup 218 and a lower annular inwardly projecting portion 304 thereof provides a bearing surface closely adjacent the distributor assembly 217a.

The included frusto-conical angle ß (Figure 5) of the surface 274 of the cup 218 of Figure 4 is about 94°; the overall height of the cup 218 from the rim 222a to the top of the cylindrical portion 276 is about 125 mm; the diameter (D) of the cup 218 at the rim 222a is about 75 mm. The ratio of the axial height of the frusto-conical portion 278 of the cup 218 to the cylindrical portion 276 is about 1.5:1.

The axial distance (d) from the rim 222a to the upper extremity of the surface 274 is about 20 mm and the ratio D:d therefore about 3.75:1. The diameter of the surface 284 is about 81% of the horizontal diameter of the surface 274 at the plane of the surface 284. The included conical angle of the baffle 298 is about 102° or 108°. The included conical angle of the upper end portion 294 is about 24° or 28°. The axial distance (d') from the rim 222a to the surface 284 is about 10 mm and the ratio (D:d') therefore about 7.5:1.

**Claims**

1. A spray device (9) comprising:

(a) an axially symmetrical spray cup (18) having an outer rim (22a) and an interior surface (74);

(b) a distributor assembly (17a) arranged symmetrically with respect to the cup (18), and which directs liquid onto the interior surface (74) to provide a film of liquid on the interior surface (74) preparatory to directing the liquid from the surface (74) past the outer rim (22a), which distributor assembly (17a) is stationary where it directs the liquid onto the interior surface (74); and

(c) means (22) for supplying a gas stream to impact the liquid immediately beyond the rim (22a) to produce a spray of liquid droplets: the distributor assembly (17a) comprising:

(d) a downstream duct portion (17); and

(e) a stationary swirl member (86) configured to provide a swirl component of motion in the liquid being directed onto the interior surface and being axially symmetrically located within the downstream duct portion (17), and wherein an annular passage is defined between the swirl member (86) and the duct portion (17), the swirl member comprising:

(f) an axially symmetrical upstream conical portion (88) with the apex of the cone leading with respect to the liquid flow.

2. A device according to claim 1, comprising means (46) for rotating the cup (18) about its axis, e.g. in the same sense as the swirl component of motion.

3. A device according to claim 1 or claim 2, wherein the swirl member (86) comprises an axially symmetrical downstream portion extending into the cup (18) coaxially therewith and which provides a downstream facing baffle (80) to gas flow, an unobstructed annular gap being defined between the baffle (80) and the interior of the cup (18) the baffle portion (80) being for example frusto-conical, diverging in the downstream direction.

4. A device according to any one of claims 1, 2 and 3, wherein the upstream conical portion (88) of the swirl member is located in a corresponding frusto-conical duct portion (17) of the distributor assembly (17a).

5. A device according to any one of the preceding claims, wherein the swirl member comprises a plurality of symmetrically arranged swirl blades (92), each of which in lateral cross-section extends across the annular passage into contact with the inner periphery of the duct portion.

6. A method of spraying a slurry, using a spray device (9) comprising:

(a) an axially symmetrical spray cup (18) having an outer rim (22a) and an interior surface (74);

(b) a stationary liquid distributor assembly (17a) arranged symmetrically with respect to the cup (18); the distributor assembly (17a) comprising:

(c) a downstream duct portion (17); and

(d) a stationary swirl member (86) which is axially symmetrically located within the downstream duct portion (17), and wherein an annular passage is defined between the swirl member (86) and the duct portion (17), the swirl member comprising:

(e) an axially symmetrical upstream conical portion (88) with the apex of the cone leading with respect to the downstream direction;

wherein the method comprises the steps of:

(f) directing slurry along the annular passage past the stationary swirl member so that a swirl component of motion is provided in the slurry; and

(g) directing the slurry with its swirl component of motion onto the interor surface (74) to provide a film of slurry on the interior surface (74) preparatory to directing the slurry from the surface (74) past the outer rim (22a); and

(h) supplying a gas stream to impact the slurry immediately beyond the rim (22a) to produce a spray of liquid droplets.

7. A method according to claim 6, wherein the cup is rotated about its axis in the same sense as the swirl component of motion, e.g. at a speed up to 6000 revolutions per minute.

8. A process of treating a polluted gas with an aqueous slurry wherein the slurry is sprayed into the gas by a method according to claim 6 or claim 7.

9. A process according to claim 8, wherein the slurry (e.g. an aqueous slurry of lime) is capable of chemical reaction with a gaseous pollutant (e.g. sulphur dioxide) in the gas, and the pollutant is absorbed from the gas by the liquid with said chemical reaction.

10. A process according to claim 9, wherein the reaction product is dried as it is formed and the water evaporated.

11. Apparatus adapted for use in absorbing a gaseous pollutant from a pollutant-containing gas under spray drying conditions comprising: a spray dryer vessel (6); a spray device according to any one of claims 1 to 5, adapted to spray an aqueous absorbent liquid into the vessel for reaction with the pollutant in the gas under the spray drying conditions to produce a solid reaction product; and a separator (5) arranged to separate solid reaction product from the gas.

**Patentansprüche**

1. Sprühvorrichtung (9), bestehend aus:

a) einer axialsymmetrischen Sprühschale (18) mit einem Außenrand (22a) und einer inneren Oberfläche (74),

b) einer Verteilereinrichtung (17a), die symmetrisch in bezug auf die Schale (18) angeordnet ist und die Flüssigkeit auf die innere Oberfläche (74) leitet, um einen Flüssigkeitsfilm auf der inneren Oberfläche (74) in Vorbereitung des Ableitens der Flüssigkeit von der Oberfläche (74) vorbei am Außenrand (22a) zu erzeugen, welche Verteilereinrichtung (17a) dort, wo sie die Flüssigkeit auf die innere Oberfläche (74) lenkt, stationär ist, und

c) einer Einrichtung (22) zum Zuführen eines Gasstromes zur Beaufschlagung der Flüssigkeit unmittelbar jenseits des Außenrandes (22a) zur Erzeugung eines Flüssigkeitsnebels, wobei die Verteilereinrichtung (17a);

d) einen strömungsabwärts befindlichen Kanalbereich (17), und

e) ein stationäres Drallteil (86) umfaßt, das so gestalhest ist, daß eine Drallbewegungskomponente in der Flüssigkeit, die auf die innere Oberfläche geleitet wird, erzeugt wird, und das axialsymmetrisch innerhalb des stromabwärts befindlichen Kanalbereichs (17) angeordnet ist, wobei ein Ringkanal zwischen dem Drallteil (86) und dem Kanalbereich (17) gebildet ist und das Drallteil;

(f) einen axialsymmetrischen strömungsaufwärts befindlichen konischen Bereich (88) aufweist, bei dem die Kegelspitze in bezug auf die Flüssigkeitsströmung vorn liegt.

2. Vorrichtung nach Anspruch 1, mit einer Einrichtung (46) zum Drehen der Schale (18) um ihre Achse, z.B. in dem selben Sinn wie die Drallbewegungskomponente.

3. Vorrichtung nach Anspruch 1 oder 2, bei der das Drallteil (86) einen axialsymmetrischen strömungsabwärts befindlichen Bereich aufweist, der sich in die Schale (18) koaxial mit dieser hineinerstreckt und der eine strömungsabwärts zum Gasstrom weisende Leitvorrichtung (80) darbietet, wobei ein unbehinderter Ringspalt zwischen der Leitvorrichtung (80) und dem Inneren der Schale (18) gebildet ist und der Leitvorrichtungsbereich (80) zum Beispiel kegelstumpfförmig ist und in strömungsabwärts weisender Richtung divergiert.

4. Vorrichtung nach einem der Ansprüche 1, 2 und 3, bei der der strömungsaufwärts gelegene konische Bereich (88) des Drallteils in einem entsprechenden kegelstumpfförmigen Kanalbereich (17) der Verteilereinrichtung (17a) angeordnet ist.

5. Vorrichtung nach einem der vorhergehenden Ansprüche, bei der das Drallteil eine Mehrzahl symmetrisch angeordneter Drallflügel (92) aufweist, von denen sich jeder im Querschnitt über den Ringkanal in Berührung mit dem Innenumfang des Kanalbereichs erstreckt.

6. Verfahren zum Sprühen einer Schlämme unter Verwendung einer Sprühvorrichtung (9), bestehend aus

a) einer axialsymmetrischen Sprühschale (18) mit einem Außenrand (22a) und einer inneren Oberfläche (74);

b) einer stationären Flüssigkeitsverteilereinrichtung (17a), die symmetrisch in bezug auf die Schale (18) angeordnet ist, wobei die Verteilereinrichtung (17a);

c) einen strömungsabwärts befindlichen Kanalbereich (17), und

d) ein stationäres Drallteil (86) umfaßt, das axialsymmetrisch innerhalb des strömungsabwärts befindlichen Kanalbereichs (17) angeordnet ist, und wobei ein Ringkanal zwischen dem Drallteil (86) und dem Kanalbereich (17) gebildet ist und das Drallteil;

e) einen axialsymmetrischen strömungsaufwärts befindlichen konischen Bereich (88) aufweist, bei dem die Kegelspitze in bezug auf die strömungsabwärts weisende Richtung vorn liegt, wobei das Verfahren folgende Schritte umfaßt:

f) Schlämme wird entlang dem Ringkanal an dem stationären Drallteil vorbeigeleitet, so daß eine Drallbewegungskomponente in der Schlämme erzeugt wird;

g) die Schlämme mit ihrer Drallbewegungskomponente wird auf die innere Oberfläche (74) geleitet, um einen Schlämmefilm auf der inneren Oberfläche (74) in Vorbereitung des Ableitens der Schlämme von der Oberfläche (74) am Außenrand (22a) vorbei zu bilden, und

h) ein Gasstrom wird zugeführt, um die Schlämme unmittelbar jenseits des randes (22a) zur Erzeugung eines Flüssigkeitsnebels zu beaufschlagen.

7. Verfahren nach Anspruch 6, bei dem die Schale um ihre Achse in dem selben Sinn wie die Drallbewegungskomponente, z.B. mit einer Geschwindigkeit von bis zu 6000 Umdrehungen pro Minute, gedreht wird.

8. Verfuhren zur Behandlung eines verunreinigten Gases mit einer wässerigen Schlämme, bei dem die Schlämme in das Gas durch ein Verfahren nach Anspruch 6 oder Anspruch 7 eingesprüht wird.

9. Verfahren nach Anspruch 8, bei dem die Schlämme (z.B. eine wässerige Kalkschlämme) zu einer chemischen Reaktion mit einem gasförmigen Verunreinigungsstoff (z.B. Schwegeldioxid) im Gas fähig ist und der Verunreinigigungsstoff aus dem Gas durch die Flüssigkeit mit der chemischen Reaktion absorbiert wird.

10. Verfahren nach Anspruch 9, bei dem das Reaktionsprodukt bei seiner Bildung getrocknet und das Wasser verdampft wird.

11. Vorrichtung zur Verwendung beim Absorbieren eines gasförmigen Verunreinigungsstoffes aus einem verunreinigigungsstoffhaltigen Gas unter Sprühtrockungsbeingungen, bestehend aus einem Sprühtrocknerbehälter (6), einer Sprühvorrichtung nach einem der Ansprüche 1 bis 6 zum Einsprühen einer wässerigen Absorptionsflüssigkeit in den Behälter zur Reaktion mit dem Verunreinigungsstoff im Gas unter den Sprühtrockungsbedingungen zur Erzeugung eines Feststoffreaktionsproduktes und einem Abscheider (5) in einer Ausgestaltung und Anordnung zum Trennen des Feststoffreaktionsprodukts vom Gas.

**Revendications**

1. Dispositif de pulvérations (9) comprenant

a) une cuvette de pulvérisation (18) à symétrie axial comportant un bord eterne (22a) et une surface interne (74);

b) un ensemble distributeur (17a) disposé symétriquement par rapport à la cuvette (18) et qui dirige un liquide vers et sur la surface interne (74) afin de constituer un film de liquide sur la surface interne (74) en préparation à la direction du liquide à partir de la surface (74) au delà du bord externe (22a) cet ensemble distributeur (17a) étant fixe lorsque il dirige le liquide verse et sur la surface interne (74);

c) des moyens (22) pour fournir un courant de gaz destiné à venir heurter le liquide immédiatement au delà du bord (22a), afin de produire une pulvérisation de gouttelettes liquides, 1 ensemble distributeur (17a) comprenant;

d) une portion de conduit aval (17); et

e) un organe fixe (86) de création d'un tourbillon conformé de manière à donner une composante tourbillonnaire au mouvement du liquide dirigé vers et sur la surface interne, et qui est disposé d'une manière symétrique par rapport à l'axe dans la portion de conduit aval (17), un passage annulaire étant défini entre l'organe de création d'un tour billon (86) et la portion de conduit (17), l'organe de création d'un tourbillon comprenant;

f) une portion conique amont (88) symétrique par rapport à l'axe, le sommet du cône étant situé en position antérieure par rapport à l'écoulement du liquide.

2. Dispositif suivant la revendication 1 caractérisé en ce qu'il comprend des moyens pour faire tourner la cuvette (18) autour de son axe par exemple dans le même sens que la composante tourbillonnaire du mouvement.

3. Dispositif suivant l'une quelconque des revendications 1 ou 2 caractérisé en ce que l'organe (86) de création d'un tourbillon comprend une portion aval symétrique par rapport à l'axe s'étendant coaxialement dans la cuvette (18) et constituant un écran (80), tourné vers l'aval, à l'égard de l'écoulement du gaz un intervalle annulaire non obstrué étant défini entre l'écran (80) et l'intérieur de la cuvette (18), la portion formant écran (80) ayant par exemple la forme d'un tronc de cone divergeant dans la direction aval.

4. Dispositif suivant l'une quelconque des revendications 1, 2 et 3 caractérisé en ce que la portion conique amont (88) de l'organe de création d'un tourbillon est logéc dans une portion de conduit correspondante tronconique (17) de l'ensemble distributeur (17a).

5. Dispositif suivant l'une quelconque des revendications précédentes caractérisé en ce que l'organe de création d'un tourbillon comprend une pluralité d'ailettes de création de tourbillon (92) disposées symétriquement, chacune de ces ailettes s'étendant en section droite latérale en travers du passage annulare et étant en contact avec la périphérie interne de la portion de conduit.

6. Procédé de pulvérisation d'une bouillie en utilisant und dispositif de pulvérisation (9) comprenant

a) une cuvette de pulvérisation (18) à symétrie axiale comportant un bord externe (22a) et une surface interne (74);

b) un ensemble distributeur de liquide fixe (17a) disposé symétriquement par rapport à la cuvette (18), cet ensemble distributeur (17a) comprenant;

c) une portion de conduit aval (17); et

d) un organe fixe (86) de création d'un tourbillon qui est disposé d'une manière symétrique par rapport à l'axe dans la portion de conduit aval (17), un passage annulaire étant défini entre l'organe de création de tourbillon (86) et la portion de conduit (17) l'organe de création d'un tourbillon comprenant;

e) une portion conique amont (88), symétrique par rapport à l'axe, le sommet du cône étant situé en position antérieure par rapport à la direction aval;

caractérisé en ce qu'il comprend les étapes consistant à:

f) diriger la bouillie le long du passage annulaire au delà de l'organe fixe de création d'un tourbillon de telle façon qu'une composante tourbillonnaire du mouvement soit donnée à la bouillie;

g) diriger la bouillie, animée de sa composante tourbillon naire de mouvement vers et sur la surface interne (74) afin de créer un film de bouillie sur la surface interne (74) en préparation à la direction de la bouillie à partir de la surface (74) au delà du bord externe (22a); et

h) fournir un courant de gas destiné à venir heurter la bouillie immédiatement au delà du bord (22a) afin de produire une pulvérisation de gouttellettes liquides.

7. Procédé suivant la revendication 6 caractérisé en ce que la cuvette est entrainée en rotation autour de son axe dans le même sens que la composante tourbillonnaire du mouvement, par exemple à une vitesse pouvant aller jusqu'à 6000 tours par minute.

8. Procédé de traitement d'un gaz pollué avec une bouillie aqueuse dans lequel la bouillie est pulvérisée dans le gaz par un procédé suivant la revendication 6 ou 7.

9. Procédé suivant la revendication 8 caractérisé en ce que la bouillie (par exemple une bouillie aqueuse de chaux) est capable de réagir chimiquement avec un pollutant gazeux (par exemple le bioxyde de soufre) dans le gaz et le polluant est absorbé à partir du gaz par le liquide, par la dite réaction chimique.

10. Procédé suivant la revendication 9 caractérisé en ce que le produit réactionnel est séché tandis qu'il est formé et l'eau est évaporée.

11. Appareil adapté pour une utilisation dans l'absorption d'un polluant gazeux à partir d'un gaz contenant un polluant dans des conditions de séchage par pulvérisation, caractérisé en ce qu'il comprend un récipient sécheur à pulvérisation (6), un dispositif de pulvérisation suivant l'une quelconque des revendications 1 à 5, adapté de manière à pulvériser un liquide absorbant aqueux dans le récipient de manière qu'il réagisse avec le polluant dans le gaz dans les conditions de séchage par pulvérisation, afin de donner un produit réactionnel solide, et un séparateur (5) agencé de manière à séparer le produit réactionnel solide du gaz.

FIG.1

FIG.2

FIG.3A

FIG.3

FIG.4

4

FIG.5